# EUROPÄISCHE PATENTSCHRIFT

(11) **EP 0 747 107 B1**
(45) Veröffentlichungstag und Bekanntmachung des Hinweises auf die Patenterteilung: **12.09.2001**
(21) Anmeldenummer: 96108906.7
(22) Anmeldetag: 04.06.1996
(51) Int. Cl.: B01D 47/06, B01D 45/08

(54) **Tropfenabscheideranordnung für Gaswäscher**
Arrangement of droplet separators for gas scrubbers
Arrangement de séparateurs de gouttelettes pour laveur de gaz

(30) Priorität: 10.06.1995 DE 19521178
(43) Veröffentlichungstag der Anmeldung: 11.12.1996
(73) Patentinhaber: Munters Euroform GmbH, 52072 Aachen (DE)
(72) Erfinder: Wolf, Hubert, 40668-Meerbusch (DE); Bulang, Siegfried, 6466 GL Kerkrade (NL); Cohrs, Olaf, 50171 Blatzheim-Kerpen (DE)
(74) Vertreter: Döring, Wolfgang, Dr.-Ing. Patentanwälte Hauck, Graalfs, Wehnert, Döring, Siemons

(56) Entgegenhaltungen:
- EP-A- 0 577 895
- DE-A- 3 724 511
- DE-A- 4 331 415
- DE-C- 578 587
- DE-C- 3 434 133
- FR-A- 2 325 413

## Beschreibung

Die vorliegende Erfindung betrifft eine Tropfenabscheideranordnung für Gaswäscher u. dgl. mit einer in Gasströmungsrichtung vorderen und hinteren Tropfenabscheiderlage, die jeweils aus mindestens einer Reihe von in der Form eines V oder eines umgekehrten V angeordneten Tropfenabscheiderprofilen bestehen, wobei jeweils eine Reihe der vorderen und hinteren Tropfenabscheiderlage in Gasströmungsrichtung ohne gegenseitigen seitlichen Versatz hintereinander angeordnet sind, und einer Spüleinrichtung zum periodischen Spülen der An- und Abströmseite beider Tropfenabscheiderlagen.

Hinter jedem Gaswäscher ist in der Regel ein Tropfenabscheider angeordnet, der über den gesamten Querschnitt eines Gaskanales, z.B. eines Rauchgaskanales, parallel zueinander angeordnete gekrümmte Lamellen (Bleche) aufweist. An den als Prallflächen wirkenden Lamellen fließen die im Gas vorhandenen oder an den Lamellen abgeschiedenen Tropfen herab. Das Problem bei derartigen Tropfenabscheidern ist, daß sich dabei auf den Lamellen Ablagerungen bilden, die dem Tropfenabscheider mit der Zeit zusetzen.

Das vorstehend genannte Problem ist insbesondere bei Rauchgasentschwefelungsanlagen akut, bei denen Tropfenabscheider zur Abscheidung von Gips-beladener Waschflüssigkeit erforderlich sind. Um diese Tropfenabscheider verstopfungsfrei zu halten, ist eine periodische Spülung der An- und Abströmseite der Tropfenabscheider nötig. Da ein Teil der Spülflüssigkeit der rückseitigen Abscheiderspülung im Betrieb mitgerissen wird, ist ein zweilagiges Tropfenabscheidersystem erforderlich, um einen derartigen Mitriß zu verhindern.

Die Spülung erfolgt vorzugsweise mit Hilfe von im Gaskanal installierten Düsen. Die Abreinigung findet dabei in Intervallen statt, in denen die Lamellen mit von den Düsen abgegebenen Reinigungsstrahlen mit Waschwasser besprüht und gespült werden.

Bei der Anordnung zweier Tropfenabscheiderlagen im Kopf eines Gaswäschers haben sich geneigte Profile als besonders reinigungsfreundlich erwiesen. In diesem Zusammenhang ist eine Tropfenabscheideranordnung der eingangs beschriebenen Art bekannt (interner Stand der Technik), bei der die zwei in Gasströmungsrichtung hintereinander angeordneten Tropfenabscheiderlagen jeweils aus mindestens einer Reihe von in der Form eines V oder eines umgekehrten V angeordneten Tropfenabscheiderprofilen bestehen. Hierbei sind die Profile beider Reihen gleichsinnig angeordnet, d.h. beide in der Form eines V oder beide in der Form eines umgekehrten V (dachförmig).

Aus der DE-C-3 434 133 ist eine Vorrichtung zum Abscheiden von Flüssigkeitstropfen aus dem Gasstrom eines lotrechten Strömungsrohres bekannt, bei der zwei übereinander angeordnete Reihen von Tropfenabscheiderbaugruppen vorgesehen sind, die in einer geneigten Lage angeordnet sind und sich an ihren Enden an großen und kleinen Trägerplatten abstützen. Hierbei scheiden sich im Normalbetrieb die vom Gasstrom mitgerissenen Tröpfchen an den Abscheiderlamellen der Tropfenabscheiderbaugruppen ab, und die abgeschiedene Flüssigkeit strömt auf den Abscheiderlamellen schräg nach unten und tropft dort an der kleinen Trägerplatte nach unten in die Waschzone. Zum Reinigen der Abscheiderlamellen wird in geeigneten Zeitabständen periodisch durch Spülrohre Spülwasser gegen die Abscheiderlamellen gespritzt, wobei jedoch die normale Gasströmung aufrecht erhalten bleibt. Dabei wird Spülflüssigkeit mitgerissen und hochgeschleudert, jedoch durch die Neigung der Abscheiderlamellen schräg in Richtung einer zugehörigen Sammelrinne, in welche die Tropfen fallen. Die Sammelrinnen sind zur Abführung der gesammelten Spülflüssigkeit geneigt.

Aus der DE-A-4 331 415 sind ein Verfahren und eine Vorrichtung zur Behandlung eines Gasstromes mit Waschflüssigkeit bekannt, wobei zwei Reihen von übereinander angeordneten Tropfenabscheiderbaugruppen vorgesehen sind. Die Baugruppen der oberen Reihe besitzen die Form eines umgedrehten V, während die Baugruppen der unteren Reihe die Form eines V besitzen. Bei dieser Ausführungsform wird die entlang den Tropfenabscheiderelementen der oberen Reihe nach unten strömende Flüssigkeit in Sammelrinnen aufgefangen, so daß sie nicht auf die untere Tropfenabscheiderreihe gelangt.

Die FR-A-2 325 413 beschreibt V-förmig und in der Form eines umgedrehten V ausgebildete Tropfenabscheiderbaugruppen, die in einem horizontalen Gasströmungskanal angeordnet sind. Während bei dem eingangs zuerst beschriebenen Stand der Technik eine gleichsinnige Anordnung der Tropfenabscheiderprofile der beiden Lagen vorgesehen ist, wird nunmehr erfindungsgemäß eine gegensinnige Anordnung vorgeschlagen, d.h. in Gasströmungsrichtung weisen die Spitzen der beiden V's entweder voneinander weg oder aufeinander zu. Beide erfindungsgemäß vorgesehene Anordnungen weisen ein wesentlich verbessertes Reinigungsverhalten gegenüber den beiden Anordnungen des Standes der Technik auf.

Die in der Beschreibung und in den Patentansprüchen verwendeten Begriffe "hintere und vordere Tropfenabscheiderlage" beziehen sich auf die Anordnung der jeweiligen Lage in Gasströmungsrichtung. Da die Gasströmungsrichtung in der Regel von unten nach oben erfolgt, sind diese Begriffe mit den Begriffen "untere und obere Lage" synonym.

Bei der einen erfindungsgemäß ausgebildeten Lösung sind somit die Profile der vorderen (oberen) Tropfenabscheiderlage in der Form eines V und die Profile der hinteren (unteren) Tropfenabscheiderlage in der Form eines umgekehrten V angeordnet. Die andere Ausführungsform der Erfindung zeichnet sich dadurch aus, daß die Profile der vorderen (oberen) Tropfenabscheiderlage in der Form eines umgekehrten V und die Profile der hinteren (unteren) Tropfenabscheiderlage in der Form eines V angeordnet sind.

Bei beiden Lösungsmöglichkeiten ergibt sich ein wesentlich verbesserter Reinigungseffekt. Bei der vorstehend zuerst beschriebenen Lösung läuft die vom vorderen (oberen) Tropfenabscheider ablaufende Spülflüssigkeit in der Mitte desselben (tiefste Stelle) zusammen und gelangt von dort auf die höchste Stelle des hinteren (unteren) Tropfenabscheiders. Von dort läuft das Spülwasser in guter Gleichmäßigkeit längs der Abscheiderprofile der hinteren (unteren) Lage zu den Randzonen und bewirkt somit eine gezielte gleichzeitige Spülung dieser Profile. Mit anderen Worten, das Spülwasser für die vordere (obere) Lage spült die hintere (untere) Lage mit.

Ein entsprechender Effekt tritt bei der vorstehend an zweiter Stelle beschriebenen Lösung auf. Hierbei läuft das Spülwasser der oberen Lage von der Mitte zu den tiefergelegenen Randzonen der Profile ab und gelangt von dort auf die am höchsten gelegenen Randzonen der Profile der hinteren (unteren) Lage. Das Spülwasser strömt dann entlang den Profilen der hinteren (unteren) Lage zur Mitte derselben, so daß auch in diesem Falle die Profile der unteren Lage durch das Spülwasser der oberen Lage zusätzlich gespült werden.

Bei der vorstehend beschriebenen Ausführungsform des Standes der Technik tritt dieser Effekt nicht auf. Bei der gleichsinnigen V-Anordnung sammelt sich hierbei das Spülwasser der vorderen (oberen) Lage im tiefsten Punkt des V und tropft von dort auf den tiefsten Punkt des darunter befindlichen V der unteren Lage. Das Wasser läuft daher nicht an den Profilen der unteren Lage entlang, so daß kein zusätzlicher Reinigungseffekt der unteren Lage erreicht wird. Bei der Ausführungsform des Standes der Technik, bei der die Profile beider Lagen dachförmig angeordnet sind, tropft das Spülwasser aus den Randbereichen der oberen Lage auf die Randbereiche der unteren Lage, so daß auch hierbei das Spülwasser nicht entlang den Profilen der unteren Lage geleitet wird.

Wie vorstehend ausgeführt, wird somit durch die erfindungsgemäße Ausbildung der Reinigungseffekt des Systems erheblich verstärkt und bewirkt eine längere Standzeit derartiger Systeme. Darüber hinaus kann der Spülzyklus der periodischen Spülung der hinteren (unteren) Lage verringert werden, da das Spülwasser für die vordere (obere) Lage weitgehend die Spülung der hinteren (unteren) Lage mit übernimmt. Hierdurch kann der Spülwasserverbrauch erheblich reduziert werden. Der zeitliche Spülwasserverbrauch ist ein wesentliches wirtschaftliches Kriterium bei der Auslegung und dem Betrieb von derartigen Gaswäschern, beispielsweise Rauchgasentschwefelungsanlagen, da dieser Verbrauchswert erheblich in den Wasserverbrauch einer derartigen Anlage eingeht.

Darüber hinaus kann mit dieser Anordnung die Bauhöhe des Absorbers deutlich verkürzt werden. Bei der Ausführungsform des Standes der Technik mußte ein entsprechender Abstand zwischen den beiden Tropfenabscheiderlagen eingehalten werden, um eine entsprechende Begehbarkeit zu erreichen. Durch die erfindungsgemäße Anordnung kann der Zwischenraum zwischen den Trägerkonstruktionen der unteren und oberen Tropfenabscheiderlage deutlich verkleinert werden, ohne daß die Begehbarkeit eingeschränkt ist. Es ergeben sich nämlich durch die gegensinnig angeordneten V's rautenförmige Hohlräume zwischen oder neben einer benachbarten oberen und unteren Reihe, die begehbar sind.

Ein weiterer Vorteil derjenigen erfindungsgemäßen Lösung, bei der die Profile der vorderen (oberen) Tropfenabscheiderlage in der Form eines umgekehrten V (dachförmig) und die Profile der hinteren (unteren) Tropfenabscheiderlage in der Form eines V angeordnet sind, besteht darin, daß die Tropfenabscheideranordnung nur eine einzige Trägerkonstruktion aufweisen muß, da an dieser Trägerkonstruktion, die im Zwischenbereich beider Lagen angeordnet ist, beide Tropfenabscheiderlagen angeordnet sein können. Bei dieser Konstruktion kann auch vorgesehen sein, daß die vordere (obere) Tropfenabscheiderlage separat von der Trägerkonstruktion demontierbar ist, wodurch sich besonders gute Reinigungs- und Wartungsmöglichkeiten ergeben, weil man auf diese Weise besonders bequem an die Profile gelangen kann.

Wie bereits eingangs erwähnt, sind zum Reinigen bzw. Spülen der Tropfenabscheiderlagen Düsen vorgesehen. Bei den erfindungsgemäßen Ausführungsformen sind diese Düsen an speziellen Stellen angeordnet. Bei derjenigen Ausführungsform, bei der die Spitzen der V's gegeneinander weisen, befinden sich vorzugsweise zwei Düsen auf der Mittelachse, und zwar jeweils an der Basis des entsprechenden V bzw. umgekehrten V. Mit diesen Düsen werden die Innenseiten der V-förmigen Lagen gereinigt. Zur Reinigung der Außenseiten befinden sich mindestens zwei Düsen in der Ebene zwischen den benachbarten Lagen, und zwar jeweils etwa in einer die beiden Füße der V's schneidenden Ebene. Hierbei sind vorzugsweise jeweils zwei Düsen vorgesehen, und zwar eine für eine obere und eine für eine untere Reihe.

Bei der Ausführungsform der Erfindung, bei der die Spitzen der V's voneinander wegweisen, sind zwei Düsen benachbart zueinander auf der vertikalen Mittelachse angeordnet, während sich jeweils eine Düse in einer Ecke des die Raute umschließenden Vierecks befindet.

Die Düsen sind an entsprechenden Trägerkonstruktionen angebracht, die wiederum an den Hauptträgerkonstruktionen (eine oder zwei) befestigt sind.

Die Erfindung wird nachfolgend anhand von Ausführungsbeispielen erläutert. Es zeigen:
- Figur 1: einen schematischen Schnitt durch den Kopf eines Gaswäschers mit einer Anordnung von zwei Lagen von Tropfenabscheidern, wobei diese Anordnung nach dem Stand der Technik ausgebildet ist;
- Figur 2: eine erste Ausführungsform einer erfindungsgemäß ausgebildeten zweilagigen Anordnung von Tropfenabscheidern im Vertikalschnitt;
- Figur 3: eine zweite Ausführungsform einer erfindungsgemäß ausgebildeten zweilagigen Anordnung von Tropfenabscheidern im Vertikalschnitt; und
- Figur 4: einen vergrößerten Vertikalschnitt durch den Kopf eines Gaswäschers mit zwei übereinander angeordneten Reihen von Tropfenabscheidern gemäß der ersten Ausführungsform der Erfindung.

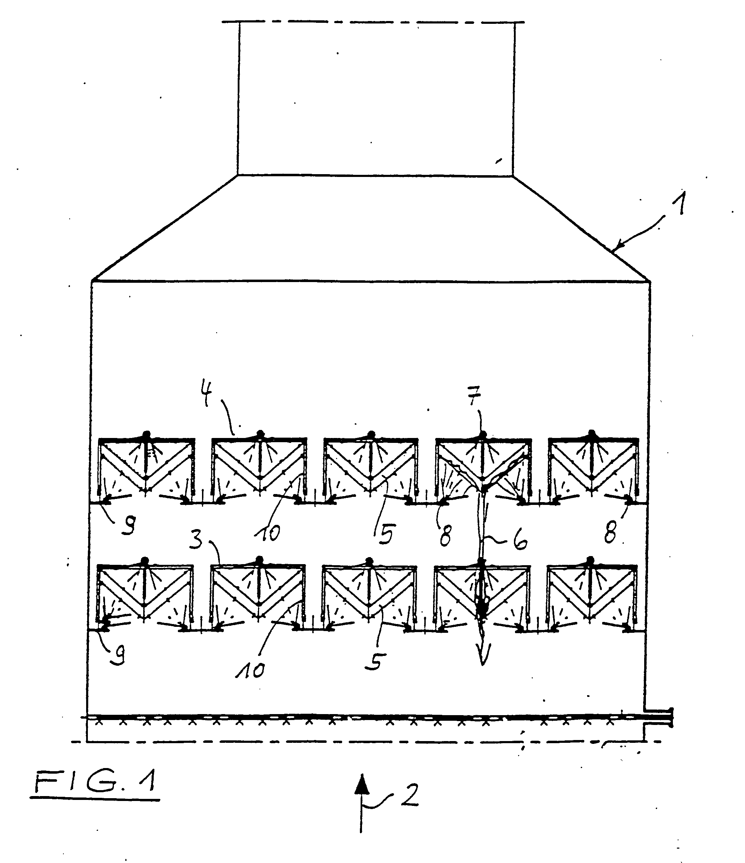

In Figur 1 ist schematisch im Vertikalschnitt der Kopf eines Gaswäschers 1 dargestellt, der von unten nach oben von einem zu reinigenden Gas durchströmt wird, wie durch den bei 2 gezeigten Pfeil angedeutet ist. Der Gasstrom passiert in Strömungsrichtung eine untere Lage 3 und eine obere Lage 4 von Tropfenabscheidern, die jeweils aus einzelnen Reihen 10 bestehen, welche den gesamten Querschnitt des Kopfes des Gaswäschers ausfüllen. Zwischen den einzelnen Reihen sind Freiräume angeordnet, um die Reihen zugänglich zu machen.

Die einzelnen Reihen 10 bestehen aus nebeneinander angeordneten Tropfenabscheiderprofilen 5 bekannter Bauart, wobei die Profile einer Reihe gegensinnig geneigt zueinander angeordnet sind. Bei der Ausführungsform des Standes der Technik der Figur 1 bilden daher benachbarte Tropfenabscheiderprofile ein V.

Die beiden Tropfenabscheiderlagen 3, 4 ruhen auf schematisch dargestellten Trägerkonstruktionen 9. Die Lagen sind in einem entsprechenden Abstand voneinander angeordnet, um eine entsprechende Begehbarkeit und damit Wartungsmöglichkeit des Bereiches zwischen den Lagen zu ermöglichen.

Um ein Verstopfen der Tropfenabscheider zu verhindern, ist eine Spüleinrichtung zum periodischen Spülen der An- und Abströmseite beider Tropfenabscheiderlagen vorgesehen. Diese Spüleinrichtung wird durch eine Vielzahl von Sprühdüsen 7, 8 gebildet, die, wie in Figur 1 gezeigt, einerseits oberhalb und mittig der V's (wie bei 7 gezeigt) und andererseits unterhalb und beidseitig der V's (wie bei 8 gezeigt) angeordnet sind. Mit diesen Düsen werden sowohl die Oberseiten als auch die Unterseiten der Tropfenabscheiderprofile besprüht, um entsprechende Schmutzansammlungen zu lösen. Man erkennt, daß das Spülwasser der oberen Abscheiderlage entlang den geneigten Profilen nach innen zum tiefsten Punkt des V zusammenläuft und von dort, wie bei 6 gezeigt, auf die untere Lage tropft. Es erreicht hierbei die tiefste Stelle des V der darunter befindlichen Reihe 10 der unteren Tropfenabscheiderlage und tropft von dort nach unten ab.

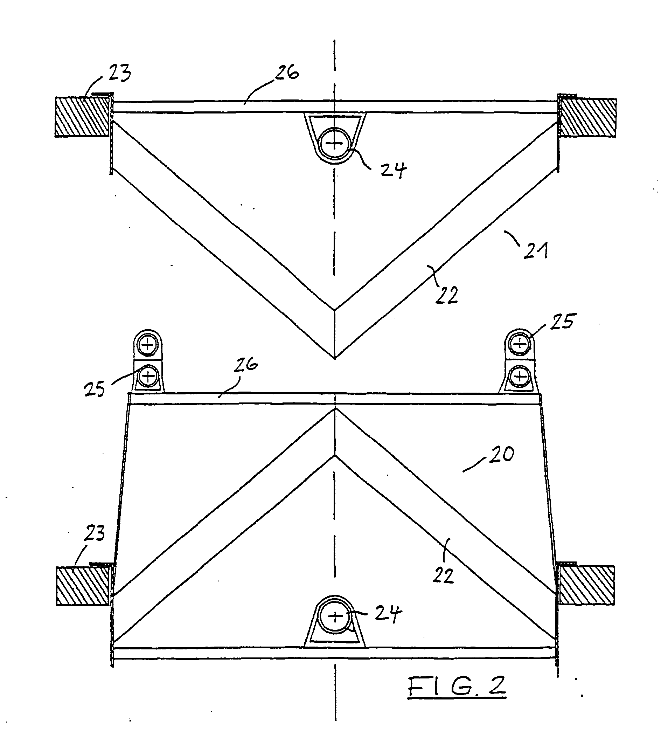

Figur 2 zeigt eine erfindungsgemäß ausgebildete Tropfenabscheideranordnung im Vertikalschnitt. Die Anordnung besteht ebenfalls aus einer unteren Tropfenabscheiderlage 20 und einer darüber angeordneten oberen Tropfenabscheiderlage 21, von denen jeweils nur eine Reihe von Tropfenabscheiderprofilen 22 dargestellt ist. Bei der oberen Lage sind die Tropfenabscheiderprofile 22 einer Reihe gegensinnig geneigt zueinander angeordnet, so daß ein V gebildet wird, während die Tropfenabscheiderprofile 22 der unteren Reihe ebenfalls gegensinnig zueinander geneigt angeordnet sind, allerdings in der Form eines umgekehrten V (dachförmig). Die einzelnen Profile können von herkömmlicher Bauart sein und brauchen an dieser Stelle nicht speziell beschrieben werden. Sie sind jeweils an einer Trägerkonstruktion 23 befestigt, die ferner weitere Trägerkonstruktionen 26 für Sprühdüsen 24, 25 haltern. Die Sprühdüsen 24 dienen zum Besprüchen der Innenseiten der Tropfenabscheiderprofile, während die Sprühdüsen 25 zum Besprüchen von deren Außenseiten dienen. Die Düsen 24 sind auf der gemeinsamen Vertikalachse der Profile angeordnet, und zwar jeweils an der Basis des V, während die Düsen 25 etwa in der mittleren Horizontalebene zwischen den Lagen angeordnet sind, und zwar auf einer die Füße der V's verbindenden Linie.

Beim Sprühen läuft das Spülwasser entlang den Profilen 22 der Reihe der oberen Lage 21 nach unten bis zur Spitze des V und tropft von dort auf die Spitze des darunter befindlichen umgekehrten V. Von dieser Spitze aus läuft es entlang den Profilen seitlich nach unten und reinigt dabei die Profile 22 der Reihe der unteren Lage 20. Durch das Spülwasser der oberen Lage wird somit ein doppelter Reinigungseffekt erzielt.

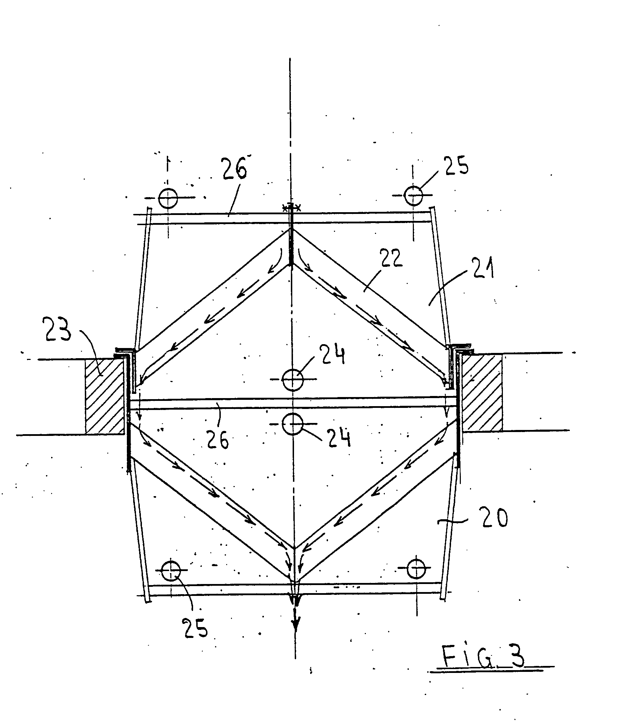

Bei der in Figur 3 gezeigten Ausführungsform sind die Tropfenabscheiderprofile 22 der oberen Lage 21 in der Form eines umgekehrten V (dachförmig) angeordnet, während die Tropfenabscheiderprofile 22 der darunter befindlichen Lage 20 in der Form eines V angeordnet sind. Die Düsenanordnung ist hierbei so ausgebildet, daß die auf der mittleren Vertikalachse angeordneten Düsen 24 benachbart zueinander angeordnet sind, während die Düsen 25 zum Besprüchen der Außenseite der Profile etwa an den Ecken eines Vierecks angeordnet ist, das die eine Raute bildenden V's einschließt. Beim Besprühen läuft das Spülwasser entlang den Profilen 22 der Reihe der oberen Lage 21 vom höchsten Punkt in der Mitte seitlich in die Randbereiche herab und tropft von dort auf die Randbereiche des darunter befindlichen V. Es läuft dann entlang den Profilen 22 nach unten zur Mitte hin, wodurch die Profile gereinigt werden. Von der Mitte tropft es nach unten. Auch hier reinigt daher das Spülwasser für die obere Lage zusätzlich die Abscheiderprofile der unteren Lage. Des weiteren ist zu erkennen, daß diese Ausführungsform eine einzige Trägerkonstruktion 23 besitzt, die sowohl die obere als auch die untere Lage hält.

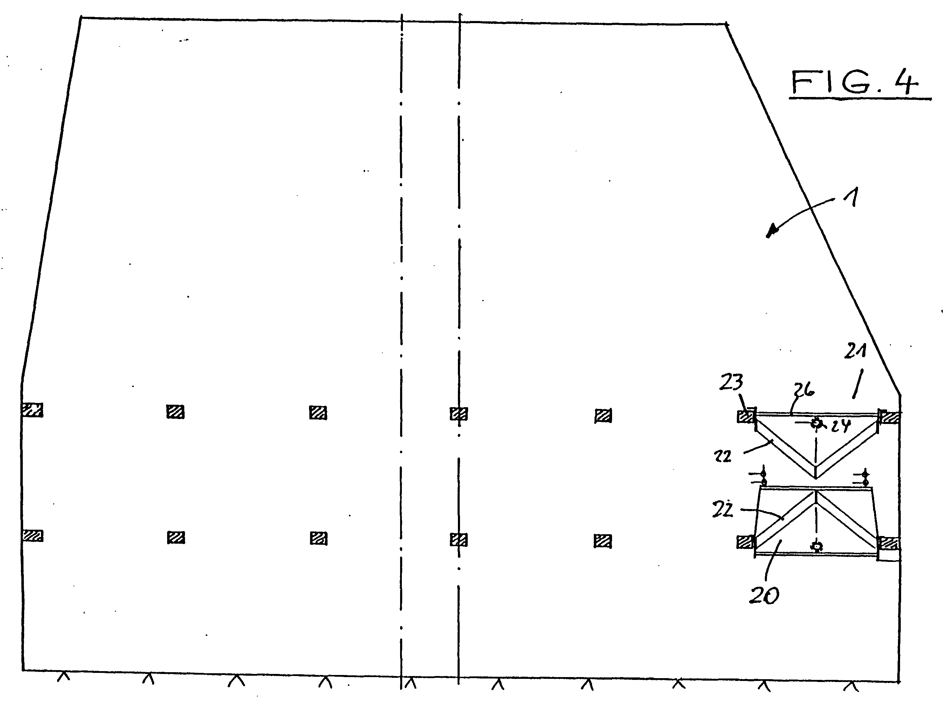

Figur 4 zeigt die in Figur 2 dargestellte Ausführungsform der Erfindung im eingebauten Zustand im Kopf des Gaswäschers 1, wobei allerdings nur zwei übereinander angeordnete Reihen der oberen und unteren Tropfenabscheiderlage 21 und 20 dargestellt sind. Die gesamte Bauhöhe ist hierbei wesentlich geringer als die der Ausführungsform des Standes der Technik gemäß Figur 1, da nur ein geringer Zwischenraum zwischen den beiden Reihen eingehalten werden muß.

## Patentansprüche

1. Tropfenabscheideranordnung für Gaswäscher u. dgl. mit einer in Gasströmungsrichtung vorderen und hinteren Tropfenabscheiderlage, die jeweils aus mindestens einer Reihe von in der Form eines V oder eines umgekehrten V angeordneten Tropfenabscheiderprofilen bestehen, wobei jeweils eine Reihe der vorderen und hinteren Tropfenabscheiderlage in Gasströmungsrichtung ohne gegenseitigen seitlichen Versatz hintereinander angeordnet sind, und einer Spüleinrichtung zum periodischen Spülen der An- und Abströmseite beider Tropfenabscheiderlage, **dadurch gekennzeichnet**, daß die Profile (22) der hintereinander angeordneten Reihen der vorderen und hinteren Tropfenabscheiderlage (21, 20) in Gasströmungsrichtung gegensinnig zueinander angeordnet sind.

2. Tropfenabscheideranordnung nach Anspruch 1, **dadurch gekennzeichnet**, daß die Profile (22) der vorderen Tropfenabscheiderlage (21) in der Form eines V und die Profile (22) der hinteren Tropfenabscheiderlage (20) in der Form eines umgekehrten V angeordnet sind.

3. Tropfenabscheideranordnung nach Anspruch 1, **dadurch gekennzeichnet**, daß die Profile (22) der vorderen Tropfenabscheiderlage (21) in der Form eines umgekehrten V und die Profile (22) der hinteren Tropfenabscheiderlage (20) in der Form eines V angeordnet sind.

4. Tropfenabscheideranordnung nach Anspruch 3, **dadurch gekennzeichnet**, daß sie eine einzige Trägerkonstruktion (23) aufweist.

5. Tropfenabscheideranordnung nach Anspruch 4, **dadurch gekennzeichnet**, daß die vordere Tropfenabscheiderlage (21) separat von der Trägerkonstruktion (23) demontierbar ist.

6. Tropfenabscheideranordnung nach einem der vorangehenden Ansprüche mit einer Vielzahl von Düsen als Sprüheinrichtung, **dadurch gekennzeichnet**, daß mehrere, insbesondere zwei, Düsen (24, 25) an einem einzigen an der Trägerkonstruktion (23) angeordneten Träger (26) vorgesehen sind.

## Claims

1. Arrangement of droplet separators for gas scrubbers etc., comprising, in gas flow direction, a front and a rear droplet separator layer, each consisting of at least one row of droplet separator profiles arranged in the shape of a V or of a reversed V, wherein a respective row of the front and the rear droplet separator layers are arranged one behind the other in gas flow direction without mutual lateral offset, and rinsing means for periodically rinsing the upstream and downstream side of both droplet separator layers, **characterized in that** the profiles (22) of the rows of the front and rear droplet separator layers (21, 20) arranged one behind the other are disposed oppositely with respect to one another in the gas flow direction.

2. The arrangement of droplet separators according to claim 1, **characterized in that** the profiles (22) of the front droplet separator layer (21) are arranged in the shape of a V and the profiles (22) of the rear droplet separator layer (20) are arranged in the shape of a reversed V.

3. The arrangement of droplet separators according to claim 1, **characterized in that** the profiles (22) of the front droplet separator layer (21) are arranged in the shape of a reversed V and the profiles (22) of the rear separator layer (20) are arranged in the shape of a V.

4. The arrangement of droplet separators according to claim 3, **characterized in that** it includes a single support construction (23).

5. The arrangement of droplet separators according to claim 4, **characterized in that** the front droplet separator layer (21) is dismountable separately from the support construction (23).

6. The arrangement of droplet separators according to one of the preceding claims having a plurality of nozzles as rinsing means, **characterized in that** a plurality of nozzles (24, 25), especially two nozzles, are provided at a single beam (26) disposed at the support construction (23).

## Revendications

1. Agencement de séparateurs de gouttes pour laveurs de gaz et similaires, avec une couche avant et une couche arrière de séparateurs de gouttelettes constituée chacune d'au moins une série de profilés de séparation de gouttelettes disposés en forme de V ou de V inversé, une série de couches avant et une série de couches arrière de séparateurs de gouttelettes étant chaque fois disposées l'une derrière l'autre dans la direction d'écoulement du gaz sans décalage latéral mutuel, et avec un dispositif de rinçage pour le rinçage périodique du côté d'attaque et du côté d'écoulement des deux couches de séparateurs de gouttelettes, **caractérisé en ce que** les profilés (22) des séries, disposées l'une derrière l'autre, constituées d'une couche avant et d'une couche arrière (21, 20) de séparateurs de gouttes sont disposées en opposition mutuelle dans la direction d'écoulement du gaz.

2. Agencement de séparateurs de gouttes selon la revendication 1, **caractérisé en ce que** les profilés (22) de la couche avant (21) de séparateurs de gouttes sont disposés en forme de V et les profilés (22) de la couche arrière (20) de séparateurs de gouttes sont disposés sous la forme d'un V inversé.

3. Agencement de séparateurs de gouttes selon la revendication 1, **caractérisé en ce que** les profilés (22) de la couche avant (21) de séparateurs de gouttes présentent la forme d'un V inversé et les profilés (22) de la couche arrière (20) de séparateurs de gouttes sont disposés en forme de V.

4. Agencement de séparateurs de gouttes selon la revendication 3, **caractérisé en ce qu**'il présente une seule structure porteuse (23).

5. Agencement de séparateurs de gouttes selon la revendication 4, **caractérisé en ce que** la couche avant de séparateurs de gouttes (21) peut être démontée séparément de la structure porteuse (23).

6. Agencement de séparateurs de gouttes selon l'une des revendications précédentes, doté d'une pluralité de gicleurs servant de dispositifs de pulvérisation, **caractérisé en ce que** plusieurs gicleurs (24, 25), et en particulier deux gicleurs, sont prévus sur un unique support (26) disposé sur la structure porteuse (23).
